# FASCICULE DE BREVET EUROPEEN

(11) **EP 2 092 281 B1**
(45) Date de publication et mention de la délivrance du brevet: **03.09.2014**
(21) Numéro de dépôt: 07719218.5
(22) Date de dépôt: 05.06.2007
(51) Int. Cl.: G01J 3/443, C23C 2/14

(54) **INSTALLATION ET PROCEDE POUR LE CONTRÔLE EN LIGNE D'UN BAIN DE GALVANISATION**
INSTALLATION UND VERFAHREN ZUR ONLINEKONTROLLE EINES FEUERVERZINKUNGSBADES
INSTALLATION AND METHOD FOR IN-LINE CONTROL OF A GALVANIZING BATH

(30) Priorité: 07.12.2006 BE 200600600
(43) Date de publication de la demande: 26.08.2009
(73) Titulaire: CENTRE DE RECHERCHES METALLURGIQUES asbl - CENTRUM VOOR RESEARCH IN DE METALLURGIE vzw, B-1000 BRUXELLES (BE)
(72) Inventeur: MONFORT, Guy, 4420 Montegnée (BE); HARDY, Yves, 4102 Ougrée (BE)
(74) Mandataire: Pronovem
(86) Numéro de dépôt international: PCT/BE2007/000055
(87) Numéro de publication internationale: WO 2008/067620

(56) Documents cités:
- EP-A- 1 384 795
- WO-A-02/38822
- DE-C1- 3 933 244
- US-B1- 6 521 015
- AWADHESH,K.R., FANG,Y.Y., JAGDISH,P.S., HANSHENG,Z.: "High temperature fiber optic laser-induced breakdown spectroscopy sensor for analysis of molten alloy constituents" REVIEW OF SCIENTIFIC INSTRUMENTS, vol. 73, no. 10, 2002, pages 3589-3599, XP012039425 American Inst. of Physics
- AWADESH,K.R., FANG-YU,Y., JAGDISH,P.S.: "Laser-induced breakdown spectroscopy of molten aluminium alloy" APPLIED OPTICS, vol. 42, no. 12, 20 avril 2003 (2003-04-20), pages 2078-2084, XP002462198 Optical Society of America
- "Information : Spectroscopie Laser-Plasma (SLP) ; Technologie de détection optique pour l'analyse rapide et en ligne de la composition chimique des matériaux" 19 mars 2003 (2003-03-19), CNRC-NRC INSTITUT DES MATÉRIAUX INDUSTRIELS , HTTP://WWW.IMI.CNRC-NRC.GC.CA , XP002462199 le document en entier

## Description

### Objet de l'invention

La présente invention se rapporte à une installation en ligne pour le contrôle simultané de la présence de mattes et de la composition chimique dans un bain de revêtement au trempé à chaud d'une bande métallique, en particulier un bain de galvanisation ou de galvannealing.

L'invention se rapporte également au procédé mis en oeuvre sur l'installation précitée.

### Arrière-plan technologique et état de la technique

Il est connu que, pour assurer une qualité constante du revêtement déposé sur les bandes d'acier, les bains de galvanisation, comprenant le plus souvent du zinc et des alliages de zinc, doivent être contrôlés sous deux aspects au moins :
- la composition chimique du bain doit être maintenue constante, notamment la concentration en certains éléments présents en faible quantité (fer, aluminium, silicium, magnésium, etc.) ;
- la présence de mattes, c'est-à-dire d'impuretés solides flottant à la surface du bain, doit être surveillée, notamment au voisinage de la tôle pour éviter des dépôts indésirables sur celle-ci. Lorsqu'elles s'accumulent en trop grande quantité, elles doivent être enlevées par un procédé approprié.

Selon l'état de la technique, la composition chimique du bain est généralement déterminée par prise d'échantillons et analyse « off-line » de ceux-ci. Cette technique contraint à des manipulations délicates dans un bain de métal fondu, prend du temps et ne permet pas en conséquence un suivi du bain réellement en continu. De plus, la composition ne peut être évaluée qu'aux endroits où il est possible physiquement de prélever l'échantillon. Le bain peut être hétérogène et ces endroits particuliers ne sont pas nécessairement représentatifs de la composition du métal qui viendra se déposer effectivement sur la tôle.

Une amélioration récente a été proposée notamment par l'Institut des Matériaux industriels (IMI, Canada). Elle consiste à faire une analyse de composition d'un bain de métal fondu en continu à l'aide de la technique de spectroscopie laser-plasma, dite LIBS (pour *Laser-Induced Breakdown Spectroscopy).*

Cette technique spectroscopique est basée sur l'irradiation du milieu analysé au moyen d'un faisceau laser pulsé (impulsions de largeur 10 nanosecondes typiquement) à haute densité de puissance (typiquement 1 gigawatt par cm² ou plus) pour former une « étincelle » qui correspond à la conversion locale de la matière en plasma. La lumière émise par le plasma est ensuite analysée par un spectromètre : il s'agit donc d'une forme de spectroscopie d'émission atomique.

Cette technique a par exemple été utilisée pour mesurer des teneurs en polluants dans des effluents liquides traités. De plus, comme il s'agit d'une technique totalement optique, donc utilisable sans contact, elle est particulièrement attrayante pour l'analyse de substances dangereuses ou à très haute température. Actuellement, en ce qui concerne les bains de métaux fondus, le dispositif développé ne permet que l'analyse du fer et de l'aluminium. Ces analyses présentent toutefois l'avantage de pouvoir être théoriquement effectuées à n'importe quel endroit du bain.

Ainsi, Awadhesh et al., dans Review of Scientific Instruments, Vol.73, N°10, p.3589-3599 (2002), présentent un système d'analyse par LIBS d'un bain de métal liquide, utilisant une fibre optique à la fois pour transmettre le faisceau laser vers la région à analyser via une sonde plongée dans le bain et pour récolter l'émission atomique d'étincelle du plasma laser en retour. Les auteurs décrivent en détail les différentes parties de l'analyseur LIBS et l'application de la technique à un alliage fondu d'aluminium.

Dans un autre article, paru dans Applied Optics, Vol.42, N°12, p.2078-2084 (2003), ces mêmes auteurs étudient plus en détail l'effet de différents paramètres tels que le gaz de purge utilisé dans la sonde ou la longueur focale de la lentille sur la sensibilité de l'analyseur dans la cas d'un alliage fondu d'aluminium. Ces deux études ont été réalisées exclusivement sur des appareils de laboratoire et des bains propres.

En ce qui concerne la problématique du contrôle des mattes, la technique la plus couramment utilisée est basée sur l'observation visuelle : lorsque la quantité de mattes est jugée trop importante par l'opérateur, celles-ci sont généralement enlevées mécaniquement par écrémage. Ceci rend obligatoire la présence d'un opérateur qui doit constamment surveiller le bain et effectuer, dans ce cas-ci également, des manipulations potentiellement dangereuses sur du métal en fusion.

De nouveaux procédés sont développés ou en cours de développement pour l'élimination des mattes, tels que l'utilisation de robots manipulateurs, les procédés électromagnétiques, etc., mais on ne connaît pas à ce jour l'existence d'un système automatique pour la mise en route de ces dispositifs.

### Buts de l'invention

La présente invention vise à fournir une solution qui permette de s'affranchir des inconvénients de l'état de la technique.

En particulier, l'invention a pour but de fournir un appareillage et un procédé de mise en oeuvre permettant un suivi simultané et en temps réel de la composition chimique et de la quantité de mattes dans les bains de galvanisation.

Comme corollaire, l'invention a pour but d'éliminer les interventions humaines en milieu dangereux, telles que les prélèvements de métal fondu, en particulier lorsque le système est couplé avec un dispositif robotisé d'élimination des mattes.

L'invention a encore pour but de clarifier les zones encore douteuses quant à la présence de mattes, après une analyse d'image conventionnelle.

### Principaux éléments caractéristiques de l'invention

Un premier objet de la présente invention se rapporte à une installation de contrôle en ligne et en temps réel d'un bain pour le revêtement au trempé à chaud d'une bande métallique au moyen d'un métal fondu, en particulier de contrôle de la composition chimique du bain et de la présence de mattes en surface du bain, comprenant :
- un système d'analyse par spectroscopie laser-plasma de type LIBS, pour *Laser-Induced Breakdown Spectroscopy,* comprenant un laser pulsé à haute densité de puisssance apte à émettre à distance un faisceau de lumière focalisé dans une région de composition chimique à analyser, située à la surface du bain ou dans la masse de celui-ci, pour créer un plasma localement et comprenant un spectromètre pour l'analyse spectrale de la lumière émise par ledit plasma ;
- un dispositif pour diriger le faisceau laser vers ladite région à analyser, et éventuellement focaliser celui-ci ;
- une caméra associée à une source de lumière, de préférence diffuse, pour acquérir une image du bain à un endroit de celui-ci où l'on souhaite surveiller la présence de mattes ;
- un système de contrôle associé au système d'analyse et à la caméra, implanté dans un ordinateur, de préférence un PC, pour effectuer un traitement d'image, le stockage de données d'analyse chimique selon la méthode LIBS précitée et la gestion des mouvements du faisceau laser ;
- un système d'avertissement d'un opérateur ou de commande d'un dispositif mécanique robotisé d'élimination des mattes à la surface du bain, ledit système étant couplé au système de contrôle.

Selon une première modalité d'exécution préférée, le dispositif pour diriger le faisceau laser comprend un miroir rotatif.

Selon une seconde modalité d'exécution préférée, le dispositif pour diriger le faisceau laser comprend un système de balayage optique.

De préférence, le bain est un bain de galvanisation ou de galvannealing et la bande métallique est une bande d'acier.

Toujours de préférence, le métal fondu est le zinc, l'aluminium, le silicium, le magnésium ou l'un de leurs alliages.

Un deuxième objet de la présente invention concerne un procédé de contrôle en ligne et en temps réel d'un bain pour le revêtement au trempé à chaud d'une bande métallique au moyen d'un métal fondu, en particulier de contrôle de la composition chimique du bain et de la présence de mattes en surface du bain, au moyen de l'installation précitée, comprenant au moins une partie des étapes suivantes :
- la composition chimique du bain est analysée en continu, en utilisant le système LIBS et le dispositif pour diriger le faisceau laser vers la région du bain à analyser ;
- des images de la partie de la surface du bain sous surveillance sont captées au moyen de la caméra pour évaluer la quantité et la position des mattes présentes à la surface du bain ;
- en fonction de la quantité et la position des mattes présentes en surface du bain, un opérateur peut être averti au moyen du système d'avertissement ou le dispositif robotisé d'élimination des mattes peut être mis en marche, grâce au système de contrôle associé.

Selon une première forme d'exécution préférée du procédé, les images captées par la caméra sont traitées en utilisant une gamme de niveaux de gris pour différencier les zones couvertes par les mattes des zones non couvertes.

Avantageusement, selon cette modalité préférée,
- au-dessus d'un seuil supérieur de niveaux de gris, on considère que la zone correspond à des mattes ;
- au-dessous d'un seuil inférieur de niveaux de gris, on considère que la zone correspond à une partie de la surface du bain ne présentant pas de mattes ;
- si l'on se trouve entre les deux seuils précités, le faisceau laser est dirigé sur la zone correspondante au moyen du dispositif pour diriger le faisceau laser, commandé par l'ordinateur de contrôle et une analyse chimique locale est effectuée par la méthode LIBS ;
- dans ce dernier cas, si la composition mesurée est en dehors d'un intervalle déterminé correspondant à une composition nominale du bain, et notamment si la proportion de fer ou d'aluminium diffère sensiblement, par exemple de plus de 30% de sa valeur dans ladite composition nominale, on considère que la zone analysée correspond à la présence de mattes.

Ainsi, normalement, le faisceau laser est dirigé vers un endroit de la surface du bain ou se trouve du zinc liquide pour analyser la composition chimique du bain. Si l'analyse des niveaux de gris localise un endroit où ne sait pas discerner s'il s'agit de zinc liquide ou de mattes, on dévie le faisceau laser dans cette zone pour y effectuer une analyse chimique locale.

Avantageusement, lorsque la proportion de mattes en surface dépasse une valeur prédéterminée ou lorsque la distance entre des mattes et la bande métallique est inférieure à une autre valeur prédéterminée, l'opérateur est averti au moyen du système d'avertissement ou le dispositif robotisé d'élimination des mattes est mis en marche.

On notera que lesdites valeurs prédéterminées sont fonction des caractéristiques constructives de chaque installation particulière. En effet, la présence de mattes à proximité de la bande n'est gênante que dans la mesure où celles-ci sont susceptibles d'être entraînées par la bande et d'y créer des défauts d'aspect. Ainsi, une intervention devra probablement être réalisée plus rapidement dans une cuve à section horizontale étroite et allongée que dans une cuve à section circulaire.

Selon une deuxième forme d'exécution préférée du procédé, la position ou la proportion surfacique de mattes est évaluée par quantification des irrégularités de surface par une méthode optique de triangulation.

Avantageusement, cette dernière modalité préférée comprend les étapes suivantes :
- une ligne lumineuse est projetée localement à la surface du bain, en utilisant la source de lumière associée à la caméra et son image est captée par cette dernière ;
- des variations de hauteur de la dite surface sont déterminées par le traitement d'images selon une mesure de triangulation ;
- lorsque les variations de hauteur dépassent un seuil maximum prédéterminé, on considère qu'on est localement en présence de mattes, le contraire étant supposé si un seuil minimum prédéterminé n'est pas atteint ;
- lorsqu'on se situe entre lesdits seuils minimum et maximum, le faisceau laser est dirigé sur la zone correspondante au moyen du dispositif pour diriger le faisceau laser, commandé par l'ordinateur de contrôle et une analyse chimique locale est effectuée par la méthode LIBS ;
- dans ce dernier cas, si la composition mesurée est en dehors d'un intervalle déterminé correspondant à une composition nominale du bain, et notamment si la proportion de fer ou d'aluminium diffère sensiblement, par exemple de plus de 30%, de sa valeur dans ladite composition nominale, on considère que la zone analysée correspond à la présence de mattes.

### Description d'une forme d'exécution préférée de l'invention

La méthode proposée selon la présente invention tire parti des possibilités d'analyse chimique offertes par la méthode LIBS et par un traitement d'image couplé à une analyse LIBS pour déterminer la quantité de mattes et ainsi définir le moment le plus opportun pour enlever celles-ci du bain de galvanisation.

L'installation utilisée comprend :
- un système d'analyse LIBS composé d'un laser pulsé qui émet un rayon focalisé à la surface du bain ou dans la masse de celui-ci. Dans ce dernier cas, un tube, dans lequel un gaz circule, plonge sous la surface du bain et permet l'analyse à son extrémité. Le faisceau laser focalisé crée donc un plasma, dont la lumière émise, lors du retour des atomes à leur état fondamental d'équilibre, présente des raies spectrales aux longueurs d'onde spécifiques des éléments chimiques qui composent le bain. Cette lumière est analysée par un dispositif approprié, généralement un spectromètre ;
- un système optique tel qu'un scanner qui permet de dévier le faisceau laser et de le focaliser à n'importe quel endroit d'une surface S jugée utile pour effectuer une analyse locale. Il s'agit généralement de la zone où les mattes s'accumulent ;
- un miroir rotatif, ou tout autre dispositif équivalent, qui permet de diriger le faisceau laser soit sur la surface (ou sous la surface) du bain, soit, via le scanner, sur la surface S ;
- une caméra associée à une source de lumière, de préférence diffuse. Cette caméra fournit une image du bain à l'endroit où on souhaite surveiller la présence de mattes, généralement près de l'entrée de la bande d'acier dans la trompe. C'est généralement à cet endroit que l'analyse chimique est également déterminée par la méthode LIBS ;
- un système de contrôle, généralement implanté dans un PC, qui permet le traitement des images, la récupération des données de l'analyse chimique et la gestion des mouvements du faisceau laser.

La méthode de contrôle du bain selon l'invention est décrite ci-après.

D'une part, l'analyse du bain est effectuée en continu par le système LIBS. D'autre part, la caméra fournit des images de la surface sous surveillance.

Selon une forme d'exécution préférée de l'invention, ces images sont traitées selon une gamme de niveaux de gris pour différencier les zones couvertes par les mattes des zones où elles sont absentes. On utilise deux seuils : un seuil supérieur, au-dessus duquel on admet qu'il s'agit de mattes et un seuil inférieur, en dessous duquel on suppose qu'il s'agit de la surface du bain vierge de mattes. Dans la zone intermédiaire, il est difficile de se prononcer et on complète l'information connue en dirigeant le faisceau laser vers cet endroit, à l'aide du scanner commandé par le PC de contrôle, et en réalisant une analyse chimique locale. Si l'analyse s'écarte significativement de la composition nominale du bain, par exemple si la proportion de fer ou d'aluminium est suffisamment différente, par exemple s'écarte de plus de 30% de la valeur dans la composition nominale, on considère qu'on est en présence de mattes.

Lorsque la proportion de mattes en surface dépasse un certain seuil ou que la zone couverte s'approche trop de la tôle, le système envoie un signal qui peut soit avertir un opérateur, soit enclencher un dispositif automatique d'élimination des mattes.

La méthode d'analyse de l'image en utilisant les niveaux de gris ne constitue qu'une application particulière du procédé selon l'invention. Toute autre méthode qui permet d'évaluer la surface relative occupée par les mattes sur base d'une prise d'images entre dans le cadre du procédé selon l'invention : l'originalité du procédé est de compléter l'information de l'analyse d'images par une analyse chimique par LIBS pour les zones douteuses.

Par exemple, selon une autre forme d'exécution préférée de l'invention, on pourrait déterminer la présence de mattes en tenant compte du fait que la surface couverte par les mattes est plus irrégulière que celle du bain de métal fondu. On pourrait notamment quantifier les irrégularités de surface en projetant une ligne lumineuse à la surface du bain et en déterminant les variations de hauteur de la surface par une mesure de triangulation, comme on l'applique dans d'autres domaines : lorsque la hauteur varie suffisamment le long de la ligne, c'est-à-dire lorsque la surface est irrégulière, on considère qu'on est en présence de mattes. A l'inverse, si la ligne est de hauteur constante, il n'y a pas de mattes. Dans les cas intermédiaires, on recourt comme ci-dessus à l'analyse LIBS pour compléter l'information.

### Avantages du procédé

La méthode proposée selon la présente invention permet le contrôle en temps réel à la fois de la composition du bain de galvanisation et de l'évolution de la position et/ou la quantité de mattes en surface. Ce procédé élimine au maximum les interventions humaines en milieu dangereux, surtout si le système est couplé avec un dispositif automatique ou robotisé d'élimination des mattes.

## Revendications

1. Installation de contrôle en ligne et en temps réel d'un bain pour le revêtement au trempé à chaud d'une bande métallique au moyen d'un métal fondu, en particulier de contrôle de la composition chimique du bain et de la présence de mattes en surface du bain, comprenant :
- comme dispositif d'analyse chimique, un système d'analyse par spectroscopie laser-plasma de type LIBS, pour *Laser-Induced Breakdown Spectroscopy,* comprenant un laser pulsé à haute densité de puisssance apte à émettre à distance un faisceau de lumière focalisé dans une région de composition chimique à analyser, située à la surface du bain ou dans la masse de celui-ci, pour créer un plasma localement et comprenant un spectromètre pour l'analyse spectrale de la lumière émise par ledit plasma ;
- un dispositif pour diriger le faisceau laser vers ladite région à analyser et focaliser celui-ci ;
- comme dispositif d'acquisition d'image indépendant du système LIBS, une caméra associée à une source de lumière, pour acquérir une image de la surface du bain à un endroit de celui-ci où l'on souhaite surveiller la présence de mattes ;
- un système de contrôle, associé à la fois au système d'analyse chimique et à la caméra précitée, implanté dans un ordinateur, de préférence un PC, pour effectuer un traitement d'image de la surface du bain, le stockage de données d'analyse chimique selon la méthode LIBS précitée et la gestion des mouvements du faisceau laser ;
- un système d'avertissement d'un opérateur ou de commande d'un dispositif mécanique robotisé d'élimination des mattes à la surface du bain, ledit système étant couplé au système de contrôle.

2. Installation selon la revendication 1, **caractérisée en ce que** le dispositif pour diriger le faisceau laser comprend un miroir rotatif.

3. Installation selon la revendication 1 ou 2, **caractérisée en ce que** le dispositif pour diriger le faisceau laser comprend un système de balayage optique.

4. Installation selon la revendication 1, **caractérisée en ce que** la source de lumière de la caméra est diffuse.

5. Procédé de contrôle en ligne et en temps réel d'un bain pour le revêtement au trempé à chaud d'une bande métallique au moyen d'un métal fondu, en particulier de contrôle de la composition chimique du bain et de la présence de mattes en surface du bain, au moyen de l'installation selon l'une quelconque des revendications précédentes, comprenant au moins une partie des étapes suivantes :
- la composition chimique du bain est analysée en continu, en utilisant le système LIBS et le dispositif pour diriger le faisceau laser vers la région du bain à analyser ;
- indépendamment de l'analyse de composition du bain, des images d'une partie de la surface du bain sous surveillance sont captées au moyen de la caméra pour évaluer la quantité et la position des mattes présentes à la surface du bain ;
- en fonction de la quantité et la position des mattes présentes en surface du bain, un opérateur peut être averti au moyen du système d'avertissement ou le dispositif robotisé d'élimination des mattes peut être mis en marche, grâce au système de contrôle associé.

6. Procédé selon la revendication 5, **caractérisé en ce que** les images captées par la caméra sont traitées en utilisant une gamme de niveaux de gris pour différencier les zones couvertes par les mattes des zones non couvertes.

7. Procédé selon la revendication 6, caractériser en ce que :
- au-dessus d'un seuil supérieur de niveaux de gris, on considère que la zone correspond à des mattes ;
- au-dessous d'un seuil inférieur de niveaux de gris, on considère que la zone correspond à une partie de la surface du bain ne présentant pas de mattes ;
- si l'on se trouve entre les deux seuils précités, le faisceau laser est dirigé sur la zone correspondante au moyen du dispositif pour diriger le faisceau laser, commandé par l'ordinateur de contrôle et une analyse chimique locale est effectuée par la méthode LIBS ;
- dans ce dernier cas, si la composition mesurée est en dehors d'un intervalle déterminé correspondant à une composition nominale du bain, et notamment si la proportion de fer ou d'aluminium diffère sensiblement, de sa valeur dans ladite composition nominale, on considère que la zone analysée correspond à la présence de mattes.

8. Procédé selon la revendication 7, **caractérisé en ce que** la composition mesurée est considérée comme en dehors de l'intervalle correspondant à la composition nominale du bain lorsque la proportion de fer ou d'aluminium diffère de plus de 30% de sa valeur dans ladite composition nominale.

9. Procédé selon l'une quelconque des revendications 5 à 8, **caractérisé en ce que**, lorsque la proportion de mattes en surface dépasse une valeur prédéterminée ou lorsque la distance entre des mattes et la bande métallique est inférieure à une autre valeur prédéterminée, l'opérateur est averti au moyen du système d'avertissement ou le dispositif robotisé d'élimination des mattes est mis en marche.

10. Procédé selon la revendication 5, **caractérisé en ce que** la position ou la proportion surfacique de mattes est évaluée par quantification des irrégularités de surface par une méthode optique de triangulation.

11. Procédé selon la revendication 10, **caractérisé par** les étapes suivantes :
- une ligne lumineuse est projetée localement à la surface du bain, en utilisant la source de lumière associée à la caméra et son image est captée par cette dernière ;
- des variations de hauteur de la dite surface sont déterminées par le traitement d'images selon une mesure de triangulation ;
- lorsque les variations de hauteur dépassent un seuil maximum prédéterminé, on considère qu'on est localement en présence de mattes, le contraire étant supposé si un seuil minimum prédéterminé n'est pas atteint ;
- lorsqu'on se situe entre lesdits seuils minimum et maximum, le faisceau laser est dirigé sur la zone correspondante au moyen du dispositif pour diriger le faisceau laser, commandé par l'ordinateur de contrôle et une analyse chimique locale est effectuée par la méthode LIBS ;
- dans ce dernier cas, si la composition mesurée est en dehors d'un intervalle déterminé correspondant à une composition nominale du bain, et notamment si la proportion de fer ou d'aluminium diffère sensiblement de sa valeur dans ladite composition nominale, on considère que la zone analysée correspond à la présence de mattes.

12. Utilisation de l'installation selon la revendication 1, dans laquelle le bain est un bain de galvanisation ou de galvannealing.

13. Utilisation de l'installation selon la revendication 1, dans laquelle la bande métallique est une bande d'acier.

14. Utilisation de l'installation selon la revendication 1, dans laquelle le métal fondu est le zinc, l'aluminium, le silicium, le magnésium ou l'un de leurs alliages.

## Patentansprüche

1. Installation zur Online- und Echtzeitkontrolle eines Feuerverzinkungsbads eines Metallbands mit Hilfe von geschmolzenem Metall, vor allem zur Kontrolle der chemischen Zusammensetzung des Bads und der Anwesenheit von Galvanisationsmatten auf der Oberfläche des Bads, die umfasst:
- als chemische Analysevorrichtung ein Analysesystem durch Laser-Plasma-Spektroskopie vom Typ LIBS für Laser-Induced Breakdown Spectroscopy, das einen gepulsten Laser mit hoher Leistungsdichte umfasst, der imstande ist, aus der Entfernung einen fokalisierten Lichtstrahl in eine Region einer zu analysierenden chemischen Zusammensetzung zu senden, die sich auf der Oberfläche des Bads oder in der Masse derselben befindet, um lokal ein Plasma zu erzeugen, und das für die Spektralanalyse des von dem Plasma gesendeten Lichts ein Spektrometer umfasst,
- eine Vorrichtung, um den Laserstrahl in die zu analysierende Region zu lenken und diesen eventuell zu fokalisieren,
- als vom LIBS-System unabhängige Bildaufnahmevorrichtung eine einer diffusen Lichtquelle zugeordnete Kamera, um ein Bild von der Oberfläche des Bads an einer Stelle desselben aufzunehmen, an der man die Anwesenheit von Galvanisationsmatten überwachen möchte,
- ein sowohl dem chemischen Analysesystem und der vorgenannten Kamera zugeordnetes Kontrollsystem, das in einem Rechner, vorzugsweise in einem PC, implantiert ist, um eine Verarbeitung des Bilds von der Oberfläche des Bads, die Speicherung der Daten der chemischen Analyse gemäß der vorgenannten LIBS-Methode und die Steuerung der Bewegungen des Laserstrahls durchzuführen,
- ein Alarmsystem für einen Bediener oder eine Steuerung einer robotergestützten mechanischen Vorrichtung zur Entfernung der Galvanisationsmatten auf der Oberfläche des Bads, wobei das System mit dem Kontrollsystem gekoppelt ist.

2. Installation nach Anspruch 1, **dadurch gekennzeichnet, dass** die Vorrichtung zur Lenkung des Laserstrahls einen rotierenden Spiegel umfasst.

3. Installation nach Anspruch 1 oder 2, **dadurch gekennzeichnet, dass** die Vorrichtung zur Lenkung des Laserstrahls ein System zur optischen Abtastung umfasst.

4. Installation nach Anspruch 1, **dadurch gekennzeichnet, dass** die Lichtquelle der Kamera diffus ist.

5. Verfahren zur Online- und Echtzeitkontrolle eines Feuerverzinkungsbads eines Metallbands mit Hilfe von geschmolzenem Metall, insbesondere zur Kontrolle der chemischen Zusammensetzung des Bads und der Anwesenheit von Galvanisationsmatten auf der Oberfläche des Bads mit Hilfe der Vorrichtung nach einem der vorhergehenden Ansprüche, das mindestens einen Teil der folgenden Schritte umfasst:
- kontinuierliche Analyse der chemischen Zusammensetzung des Bads unter Verwendung des LIBS-Systems und der Vorrichtung zur Lenkung des Laserstrahls in Richtung der zu analysierenden Region des Bads,
- unabhängig von der Analyse der Zusammensetzung Anfertigung von Bildern des unter Beobachtung stehenden Teils der Oberfläche des Bads mit der Kamera, um die Menge und die Lage der auf der Oberfläche des Bads vorhandenen Galvanisationsmatten beurteilen zu können,
- in Abhängigkeit von der Menge und der Lage der auf der Oberfläche des Bads vorhandenen Galvanisationsmatten Warnung eines Bedieners mit dem Alarmsystem oder Einschalten der robotergestützten Vorrichtung zur Entfernung der Galvanisationsmatten mit dem beigeordneten Kontrollsystem.

6. Verfahren nach Anspruch 5, **dadurch gekennzeichnet, dass** die von der Kamera angefertigten Aufnahmen mit einer Graustufenskala verarbeitet, um die von den Galvanisationsmatten bedeckten Zonen von den nicht bedeckten Zonen zu unterscheiden.

7. Verfahren nach Anspruch 6, **dadurch gekennzeichnet, dass**:
- über einem oberen Graustufengrenzwert davon ausgegangen wird, dass die Zone Galvanisationsmatten entspricht,
- unter einem unteren Graustufengrenzwert davon ausgegangen wird, dass die Zone einem Teil der Oberfläche des Bads entspricht, die keine Galvanisationsmatten aufweist,
- wenn man sich zwischen den zwei vorgenannten Grenzwerten befindet, der Laserstrahl mit Hilfe der Vorrichtung zur Lenkung des Laserstrahls, die vom Kontrollrechner gesteuert wird, auf die entsprechende Zone gerichtet wird, und mit Hilfe der LIBS-Methode eine lokale chemische Analyse durchgeführt wird,
- in diesem letzteren Fall, wenn sich die gemessene Zusammensetzung außerhalb eines bestimmten Intervalls befindet, das einer nominalen Zusammensetzung des Bads entspricht, und vor allem dann, wenn der Gehalt an Eisen oder Aluminium erheblich abweicht, davon ausgegangen wird, dass die analysierte Zone der Anwesenheit von Galvanisationsmatten entspricht.

8. Verfahren nach Anspruch 7, **dadurch gekennzeichnet, dass** die gemessene Zusammensetzung als außerhalb des Intervalls, das der nominalen Zusammensetzung des Bads entspricht, betrachtet wird, wenn der Anteil an Eisen oder Aluminium um mehr als 30 % von seinem Wert in der nominalen Zusammensetzung abweicht.

9. Verfahren nach einem der Ansprüche 5 bis 8, **dadurch gekennzeichnet, dass** der Bediener mit dem Alarmsystem informiert oder die robotergestützten Vorrichtung zur Entfernung der Galvanisationsmatten eingeschaltet wird, wenn der Anteil der Galvanisationsmatten auf der Oberfläche einen vorbestimmten Wert überschreitet oder wenn der Abstand zwischen Galvanisationsmatten und dem Metallband kleiner als ein anderer vorbestimmter Wert ist.

10. Verfahren nach Anspruch 5, **dadurch gekennzeichnet, dass** die Position oder der Oberflächenanteil der Galvanisationsmatten durch Quantifizierung der Unregelmäßigkeiten auf der Oberfläche anhand einer optischen Triangulationsmethode ermittelt wird.

11. Verfahren nach Anspruch 10, das durch die folgenden Schritte gekennzeichnet ist:
- lokale Projizierung einer Lichtlinie auf die Oberfläche des Bads mit einer einer Kamera zugeordneten Lichtquelle und Aufnahme ihres Bilds durch die Kamera,
- Bestimmung der Höhenvariationen der Oberfläche durch Bildverarbeitung gemäß einer Triangulationsmessung,
- Feststellung, wenn die Höhenvariationen einen vorbestimmten maximalen Grenzwert überschreiten, dass lokal Galvanisationsmatten vorhanden sind, wobei vom Gegenteil ausgegangen wird, wenn ein vorbestimmter unterer Grenzwert nicht erreicht wird,
- Fixierung des Laserstrahls, wenn man sich zwischen dem niedrigsten und maximalen Grenzwert befindet, mit Hilfe der Vorrichtung zur Lenkung des Laserstrahls, die vom Kontrollrechner gesteuert wird, auf die entsprechende Zone und Durchführung einer lokalen chemischen Analyse mit Hilfe der LIBS-Methode,
- in diesem letzteren Fall, wenn sich die gemessene Zusammensetzung außerhalb eines bestimmten Intervalls befindet, das einer nominalen Zusammensetzung des Bads entspricht, und vor allem dann, wenn der Gehalt an Eisen oder Aluminium erheblich von seinem Wert in der nominalen Zusammensetzung abweicht, Feststellung, dass die analysierte Zone der Anwesenheit von Galvanisationsmatten entspricht.

12. Verwendung der Installation nach Anspruch 1, wobei das Bad ein Galvanisierungs- oder Galvannealing-Bad ist.

13. Verwendung der Installation nach Anspruch 1, wobei das Metallband ein Stahlband ist.

14. Verwendung der Installation nach Anspruch 1, wobei das geschmolzene Metall das Zink, das Aluminium, das Silizium, das Magnesium oder eine ihrer Legierungen ist.

## Claims

1. An installation for controlling online and in real time a bath for hot-dip coating of a metal strip by means of a molten metal, in particular for controlling the chemical composition of the bath and the presence of mattes at the surface of the bath, comprising:
- as a chemical analysis device, an analysis system using laser-plasma spectroscopy of the LIBS (Laser-Induced Breakdown Spectroscopy) type, comprising a high power density pulsed laser capable of remotely emitting a beam of light focused in a region of chemical composition to be analyzed, located at the surface of the bath or in the mass of the latter, in order to locally generate plasma and comprising a spectrometer for the spectral analysis of the light emitted by said plasma;
- a device for directing the laser beam towards said region to be analyzed and for focusing it;
- as an image acquisition device independent of the LIBS system, a camera associated with a light source, in order to acquire an image of the surface of the bath at a location of the latter where monitoring the presence of mattes is desired;
- a control system, associated both with the chemical analysis system and with the aforementioned camera, implanted in a computer, preferably a PC, for processing an image of the surface of the bath, storing the chemical analysis data according to the aforementioned LIBS method and managing the movements of the laser beam;
- a system for warning an operator or for controlling an automated mechanical device for removing the mattes at the surface of the bath, said system being coupled with the control system.

2. The installation according to Claim 1, **characterized in that** the device for directing the laser beam comprises a rotary mirror.

3. The installation according to Claim 1 or 2, **characterized in that** the device for directing the laser beam comprises an optical scanning system.

4. The installation according to Claim 1, **characterized in that** the light source of the camera is diffuse.

5. A method for controlling online and in real time a bath for hot-dip coating a metal strip by means of a molten metal, in particular for controlling the chemical composition of the bath and the presence of mattes at the surface of the bath, by means of the installation according to any one of the preceding claims, comprising at least one portion of the following steps:
- the chemical composition of the bath is continuously analyzed, by using the LIBS system and the device for directing the laser beam towards the region of the bath to be analyzed;
- independently of the analysis of the bath composition, images of a portion of the surface of the bath being monitored are captured by means of the camera for evaluating the amount and the position of the mattes that are present at the surface of the bath;
- depending on the amount and position of the mattes present at the surface of the bath, an operator may be warned by means of the warning system or the automated device for removing the mattes may be actuated, thanks to the associated control system.

6. The method according to Claim 5, **characterized in that** the images captured by the camera are processed using a range of grey levels for differentiating the areas covered by the mattes from the non-covered areas.

7. The method according to Claim 6, **characterized in that**:
- above an upper threshold of grey levels, the area is considered to correspond to mattes;
- below a lower threshold of grey levels, the area is considered to correspond to a portion of the surface of the bath not having any mattes;
- in between both aforementioned thresholds, the laser beam is directed onto the corresponding area by means of the device for directing the laser beam, controlled by the control computer and a local chemical analysis is carried out using the LIBS method;
- in the latter case, if the measured composition is outside a determined interval corresponding to a nominal composition of the bath, and notably if the iron or aluminium proportion substantially differs from its value in said nominal composition, the analyzed area is considered to correspond to the presence of mattes.

8. The method according to Claim 7, **characterized in that** the measured composition is considered as being outside the interval corresponding to the nominal composition of the bath when the iron or aluminum proportion differs by more than 30% of its value in said nominal composition.

9. The method according to any one of Claims 5 to 8, **characterized in that**, when the proportion of mattes at the surface exceeds a predetermined value or when the distance between mattes and the metal strip is less than another predetermined value, the operator is warned by means of the warning system or the automated device for removing the mattes is actuated.

10. The method according to Claim 5, **characterized in that** the position or the surface proportion of mattes is evaluated by quantifying surface irregularities using an optical triangulation method.

11. The method according to Claim 10, **characterized by** the following steps:
- a line of light is locally projected onto the surface of the bath, by using the light source associated with the camera and its image is captured by the latter;
- height variations of said surface are determined by processing images according to a triangulation measurement;
- when the height variations exceed a predetermined maximum threshold, it is considered that mattes are locally present, the opposite being assumed if a predetermined minimum threshold is not reached;
- when the height variations are between said minimum and maximum thresholds, the laser beam is directed onto the corresponding area by means of the device for directing the laser beam, controlled by the control computer and a local chemical analysis is carried out using the LIBS method;
- in the latter case, if the measured composition is outside a determined interval corresponding to a nominal composition of the bath, and notably if the iron or aluminum proportion substantially differs from its value in said nominal composition, the analyzed area is considered to correspond to the presence of mattes.

12. The use of the installation according to Claim 1, in which the bath is a galvanization or galvannealing bath.

13. The use of the installation according to Claim 1, in which the metal strip is a steel strip.

14. The use of the installation according to Claim 1, in which the molten metal is zinc, aluminum, silica, magnesium or one of their alloys.
